# EUROPEAN PATENT SPECIFICATION

(11) **EP 2 579 278 B1**
(45) Date of publication and mention of the grant of the patent: **11.03.2015**
(21) Application number: 11306303.6
(22) Date of filing: 07.10.2011
(51) Int. Cl.: H01B 7/36, H01B 15/00

(54) **Anti-theft cable**
Antidiebstahlkabel
Câble antivol

(43) Date of publication of application: 10.04.2013
(73) Proprietor: Nexans, 75008 Paris (FR)
(72) Inventor: Cofre Luna, Jorge Antonio, SANTIAGO (CL)
(74) Representative: Peguet, Wilfried

(56) References cited:
- DE-U1-202007 009 370
- US-A- 3 789 130

## Description

The present invention relates to an electric cable comprising an elongated electrical conductor composed of at least two elongated metallic elements, said cable having the particularity to discourage the theft of metallic elements.

More particularly, the electric cable is an electric power or communication cable.

In prior art, different systems are well-known to limit the theft of a length of cable.

By way of example, the document US 3 789 130 describes an electric cable incorporating from one hand, usual metallic conductors, and from the other hand insulated at least one mineral insulated cable including a metal sheath enclosing at least one conductor which is separated from the sheath by a compacted inorganic powder such as magnesium oxide. Said mineral insulated cable enclosed in said electric cable are suitable for connection in an alarm circuit and are not easily accessible to a thief who wishes to put the alarm circuit out of action to enable him to steal a length of the electric cable.

However, this anti-theft system is quite complex to fabricate, and does not prevent easily the thief from reselling the metal of the metallic conductors. DE 20 2007 009 370 U1 discloses an electric cable with two layers of copper wires with iron wires between the layers. The iron has a higher melting point than the copper, it thus contaminates the metal once the metal copper has been melted.

The present invention seeks to provide an alternative solution to solve the above-mentioned problems, and proposes to provide an electric cable discouraging the theft of metallic conductor composing said cable, said cable being easy to fabricate and being able to limit the reselling of the metal of metallic wires, especially when metallic wires are copper wires.

To this end, an object of the present invention is to provide an electric cable comprising an elongated electrical conductor composed of at least a first metallic elongated element surrounded by a second metallic elongated element, characterized in that the electric cable further comprises an elongated mineral element including mica as mineral material having a melting point superior or equal to the melting point of the first and second elongated metallic elements element, said elongated mineral element being positioned along the electric cable and between the first and the second metallic elongated elements.

The elongated mineral element along the cable is hidden thanks to the second metallic elongated element.

The elongated mineral element is also difficult to separate from the first and the second elongated metallic elements, especially when the metallic elements are stranded.

When a length of the electric cable according to the invention is stolen, in a first step, the thief typically burns the organic insulation eventually surrounding the second metallic elongated element, at a temperature which is inferior to the melting temperature of the metallic elements.

In a second step, the thief melts the first and the second elongated metallic elements in order to easily resell the metal of the metallic elements. Hence, once the thief melts the metal of the first and the second elongated metallic elements, the mineral element is also incorporated within the melted metal of the elongated metallic elements, so that the mineral element contaminates the metal of the elongated metallic elements, and then affects the mechanical and electrical properties of said metal.

Hence, the presence of the mineral element once the metal of the elongated metallic elements has been melted advantageously allows to prove that the elongated metallic elements have been stolen, since it will be easy to detect in the reselling metal the presence of said mineral element by method well-known in the art. The reselling metal is thus easily traceable.

Furthermore, the presence of the mineral element between the two elongated metallic elements of the electric cable according to the invention does not substantially affect the electrical conductivity of the elongated electrical conductor.

In a preferred embodiment, the elongated mineral element can be directly in contact with the first and the second metallic elongated elements, so that there is no further intermediate layer between said two metallic elongated elements.

The first elongated metallic element can be a central elongated metallic element, or a metallic layer. The second elongated metallic element can be a metallic layer.

In the present invention, the method to determine the melting point (or melting temperature) of a mineral element or material is classically done by TDA (Thermal Gravimetric Analysis) or DSC (Differential Scanning Calorimeter) methologies (e.g. DSC with a temperature ramp of 10°C/min under nitrogen atmosphere).

In a preferred embodiment, the first and the second elongated metallic elements are elements made from copper, the melting point of copper being around 1084°C.

According to the invention, each of the first and the second elongated metallic elements is preferably a plurality of metallic wires, and more preferably a plurality of copper wires.

The elongated mineral element comprises mica, and preferably either phlogopite mica or muscovite mica.

More particularly, the mineral material of the elongated mineral element is mica, and preferably either phlogopite mica or muscovite mica.

The melting point of mica is typically comprises between 1300°C and 1800°C, so that when copper elongated elements are used as first and second elements, the melting point of mica is superior to the melting point of copper.

The elongated mineral element can be laid along the electric cable, between the first and the second elongated metallic elements.

It can be wound or not wound around the first elongated metallic element.

The preferred embodiment of the elongated mineral element is a mica coated tape.

The mica coated tape can advantageously be printed/marked, instead of laser printing directly on the elongated metallic elements.

Advantageously, the first and the second elongated metallic elements are stranded, so that it becomes more difficult to separate the mineral element from the first and the second elongated metallic elements.

In a particular embodiment, the first metallic elongated element is stranded in an opposite direction than the second elongated metallic element.

The electric cable according to the invention can further comprise at least one organic layer surrounding the second metallic elongated element. Said organic layer can typically be an electrically insulating layer or a protecting sheath.

Another object of the present invention is a method to fabricate an electric cable as previously defined.

Said method of fabricating the electric cable of the invention comprises the following steps:
i. deposit the elongated mineral element along the first elongated metallic element, the latter being optionally stranded in a first direction,
ii. deposit the second elongated metallic element around the elongated mineral element, the second elongated metallic element being optionally stranded in a second direction different from the first direction.

More preferably, in step i, the elongated mineral element is wound around the first metallic elongated element.

Said method of fabricating the electric cable allows advantageously to easily deposit the elongated mineral element during the fabrication, even during stranding.

The present invention will become more fully understood from the detailed description given herein below and from the accompanying drawing which is given by way of illustration only, and thus, which is not limits of the present invention.

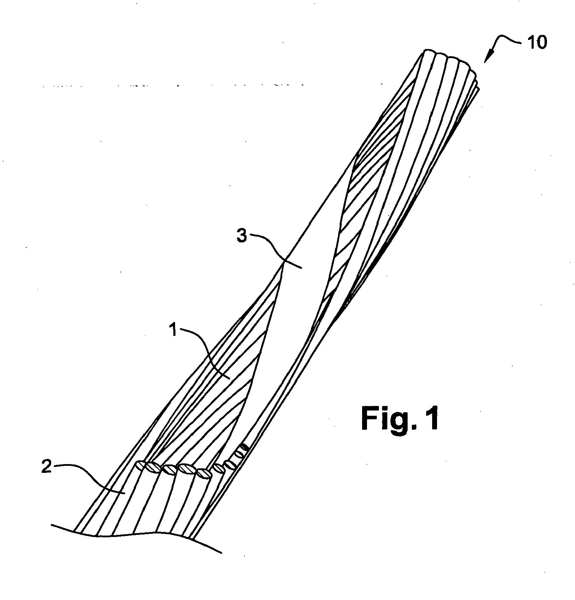

Figure 1 represents a partial view of an electric cable according to the invention.

For reasons of clarity, the same elements are designed by identical references. Similarly, only those elements that are essential for understanding the invention are shown in diagrammatic manner, and scale is not complied with.

Figure 1 describes an electric cable 10 including an elongated electrical conductor 1, 2.

Said elongated electrical conductor is composed of:
- a first elongated metallic element 1, as a central element of metallic wires, made of copper, and
- a second elongated metallic element 2, as a layer of metallic wires, made of copper, surrounding the central element 1 of metallic wires.

As illustrated on figure 1, the metallic wires of the central element 1 are stranded in an opposite direction than the metallic wires of the layer 2.

The electric cable 10 further includes an elongated mineral element 3, positioned along the cable and between the central element 1 of copper wires and the layer 2 of copper wires.

Thanks to the partial view of figure 1, wherein one part of the layer 2 of copper wires has been removed for a better understanding of the present invention, the elongated mineral element 3 can be visible between the central element 1 and the layer 2.

The elongated mineral element 3 is directly in contact with the central element 1 and the layer 2.

In the present example, the elongated mineral element 3 is a mica coated tape, such as the one commercialized by COGEBI under the reference Firox P, or from SWECO under the reference SA864G-J1, wound around the central element 1. The melting temperature of the mica composing the mica coated tape is of 1300°C.

The electric cable can further include an organic layer (not shown) surrounding the layer 2 of copper wires, said organic layer being used for example as an electrically insulating layer. Said organic layer can typically be a polymeric layer made of polyolefin(s).

## Claims

1. Electric cable (10) comprising an elongated electrical conductor composed of at least a first metallic elongated element (1) surrounded by a second metallic elongated element (2), **characterized in that** the electric cable (10) further comprises an elongated mineral element (3) including mica as contaminating mineral material having a melting point superior or equal to the melting point of the first and second metallic elements, said elongated mineral element being positioned along the electric cable (10) and between the first and the second metallic elongated elements (1, 2).

2. Electric cable according to claim 1, **characterized in that** each of the first and the second elongated metallic elements (1, 2) is preferably a plurality of metallic wires.

3. Electric cable according to claim 1 or 2, **characterized in that** the first and the second elongated metallic elements (1, 2) are elements made from copper.

4. Electric cable according to anyone of the preceding claims, **characterized in that** the elongated m ineral element (3) is a mica coated tape.

5. Electric cable according to anyone of the preceding claims, **characterized in that** the first and the second metallic elongated elements (1 , 2) are stranded elements.

6. Electric cable according to anyone of the preceding claims, **characterized in that** the first metallic elongated element (1) is stranded in an opposite direction than the second metallic elongated element (2).

7. Electric cable according to anyone of the preceding claims, **characterized in that** it further comprises an organic layer surrounding the second metallic elongated element.

8. Use of the elongated mineral element of the electric cable according to anyone of the preceding claims, to contaminate the metal of the elongated metallic elements once the metal of the metallic elongated elements has been melted.

## Patentansprüche

1. Elektrisches Kabel (10), umfassend einen verlängerten elektrischen Leiter, der aus mindestens einem ersten metallischen verlängerten Element (1) besteht, das von einem zweiten verlängerten Element (2) umgeben ist, **dadurch gekennzeichnet, dass** das elektrische Kabel (10) weiter ein verlängertes mineralisches Element (3) umfasst, darin eingeschlossen Glimmer als verunreinigendes mineralisches Material mit einem Schmelzpunkt, der höher oder gleich dem Schmelzpunkt des ersten und des zweiten metallischen Elements ist, wobei das verlängerte mineralische Element entlang dem elektrischen Kabel (10) und zwischen dem ersten und dem zweiten metallischen verlängerten Element (1, 2) angeordnet ist.

2. Elektrisches Kabel nach Anspruch 1, **dadurch gekennzeichnet, dass** jedes des ersten und des zweiten verlängerten metallischen Elements (1, 2) vorzugsweise eine Vielzahl von metallischen Drähten ist.

3. Elektrisches Kabel nach Anspruch 1 oder 2, **dadurch gekennzeichnet, dass** das erste und das zweite verlängerte metallische Element (1, 2) Elemente sind, die aus Kupfer hergestellt sind.

4. Elektrisches Kabel nach einem der vorhergehenden Ansprüche, **dadurch gekennzeichnet, dass** das verlängerte mineralische Element (3) ein Glimmer-beschichtetes Band ist.

5. Elektrisches Kabel nach einem der vorhergehenden Ansprüche, **dadurch gekennzeichnet, dass** das erste und das zweite metallische verlängerten Element (1, 2) verseilte Elemente sind.

6. Elektrisches Kabel nach einem der vorhergehenden Ansprüche, **dadurch gekennzeichnet, dass** das erste metallische verlängerte Element (1) in einer entgegengesetzten Richtung als das zweite metallische verlängerte Element (2) verseilt ist.

7. Elektrisches Kabel nach einem der vorhergehenden Ansprüche, **dadurch gekennzeichnet, dass** es weiter eine organische Schicht umfasst, die das zweite metallische verlängerte Element umgibt.

8. Verwendung des verlängerten mineralischen Elements des elektrischen Kabels nach einem der vorhergehenden Ansprüche, um das Metall der verlängerten metallischen Elemente zu verunreinigen, nachdem das Metall der metallischen verlängerten Elemente geschmolzen wurde.

## Revendications

1. Câble électrique (10) comprenant un conducteur électrique allongé composé d'au moins un premier élément métallique allongé (1) entouré par un deuxième élément métallique allongé (2), **caractérisé en ce que** le câble électrique (10) comprend en outre un élément minéral allongé (3) comprenant du mica en tant que matériau minéral contaminant ayant un point de fusion supérieur ou égal au point de fusion des premier et deuxième éléments métalliques, ledit élément minéral allongé étant positionné le long du câble électrique (10) et entre les premier et deuxième éléments métalliques allongés (1, 2).

2. Câble électrique selon la revendication 1, **caractérisé en ce que** chacun des premier et deuxième éléments métalliques allongés (1, 2) consiste de préférence en une pluralité de fils métalliques.

3. Câble électrique selon la revendication 1 ou 2, **caractérisé en ce que** les premier et deuxième éléments métalliques allongés (1, 2) sont des éléments réalisés à partir du cuivre.

4. Câble électrique selon l'une quelconque des revendications précédentes, **caractérisé en ce que** l'élément minéral allongé (3) consiste en une bande revêtue de mica.

5. Câble électrique selon l'une quelconque des revendications précédentes, **caractérisé en ce que** les premier et deuxième éléments métalliques allongés (1, 2) sont des éléments torsadés.

6. Câble électrique selon l'une quelconque des revendications précédentes, **caractérisé en ce que** le premier élément métallique allongé (1) est torsadé dans une direction opposée à celle du deuxième élément métallique allongé (2).

7. Câble électrique selon l'une quelconque des revendications précédentes, **caractérisé en ce qu'**il comprend en outre une couche organique entourant le deuxième élément métallique allongé.

8. Utilisation de l'élément minéral allongé du câble électrique selon l'une quelconque des revendications précédentes pour contaminer le métal des éléments métalliques allongés une fois que le métal des éléments métalliques allongés a été fondu.
